# EUROPEAN PATENT SPECIFICATION

(11) **EP 0 629 569 B1**
(45) Date of publication and mention of the grant of the patent: **17.09.1997**
(21) Application number: 94830130.4
(22) Date of filing: 22.03.1994
(51) Int. Cl.: B65G 29/00, B65G 47/84, B67B 3/00, B67C 3/00

(54) **Star conveyor with adjustement device for variously-shaped containers**
Sternrad mit Justiervorrichtung für unterschiedlich geformte Behälter
Roue en forme d'étoile avec dispositif d'ajustage pour récipients ayant des formes différentes

(30) Priority: 19.05.1993 IT PR930021
(43) Date of publication of application: 21.12.1994
(73) Proprietor: SASIB BEVERAGE S.p.A., I-43100 Parma (IT)
(72) Inventor: Cavazzini, Riccardo, I-43100 Parma (IT)
(74) Representative: Lanzoni, Luciano

(56) References cited:
- EP-A- 0 355 971
- EP-A- 0 412 059
- DE-A- 2 623 309
- DE-A- 3 143 511
- PATENT ABSTRACTS OF JAPAN vol. 11, no. 48 (M-561) 13 February 1987 & JP-A-61 211 220 (MITSUBISHI HEAVY IND) 19 September 1986

## Description

The prior art comprises star conveyors having a rotating body provided at its perimeter with a plurality of compartments for receiving and then transporting containers, said containers being externally steadied by a guide preventing them from falling off the conveyor. When the type of container to be filled is changed, then it is also necessary to change the compartment shape and the guide: this has been obviated by recent improvements in the field.

DE 3143511 teaches an adjustable star conveyor, provided with "scissor" type transporter elements which are able to adapt to containers having different diameters. The scissor elements are activated by a rather complex mechanism, however.

The above-mentioned document also comprises a further embodiment based on the use of a plurality of rotating plates having more than one work position. Each of the positions exhibits a chamber for transporting a container of a predetermined diameter. Obviously this leads to difficulties in the adjustment of all of the plates if the container shape is to be changed.

European Patent Applications EP 0 355 971 and EP 0 412 059 both refer (though with different embodiment modalities) to transfer stars provided with a plurality of pushing elements which adapt themselves to different containers, and also with an adjustable external guide. The pushing elements, however, are activated by somewhat complicated mechanisms and what is more, in the case of EP 0 355 971, there are problems associated with transport precision inasmuch as differently-shaped containers are not moved on the same line, leading to the need for the star conveyor to be laterally displaced in order for the containers to be correctly oriented for entry into bottle filler machines, which require considerable precision.

JP 61-211220 teaches a star conveyor comprising two superposed plates equipped with compartments, the plates being able to rotate with respect to each other in order to change the aperture of the part where the bottles are gripped by the neck.

The above device needs special staffs to bring the lower plate up to the same level as the upper plate in the gripping zone: furthermore, the adjustment mechanism for the two plates, in essence a bolt, is somewhat imprecise.

A further drawback is that the body of the bottle rests on one only generatrix of the bottle, since the intermediate compartments for holding the body of the bottle are not adjustable and when the bottle format is changed the bottles are not always perfectly centred on the compartments.

DE-A-2 623 309 forms the basis for the preamble of claim 1 and discloses a star conveyor for containers with an adjustment device comprising two superimposed discs and an intermediate disc arranged in such a way as the intermediate disc may be rotated with respect to the superimposed discs. The means for rotating the discs comprise a threaded rod having a first threaded guide associated to the upper disc and a second threaded guide associated to the intermediate disc. A further articulated fork guide acts in the middle of the rod. The threaded rod has a wheel for a manual use: when the wheel is rotated, the discs rotate in such a way as the locations for the containers enlarge or restrict to adapt themselves to different sized containers.

The adjustment device described in said document is mechanically complex and the threaded elements are subject to a rapid wear and tear.

Furthermore the main drawback arises when the star conveyor is employed for transporting container in PET provided with a projecting neck.

In this case the application of the device becomes very laborious because the German device acts on the body of the container and if it were applied on a star conveyor for containers transported suspended by the projecting neck, the adjustment device and the threaded rod should be placed substantially in the middle of the star conveyor, under the upper disc and so it would be very difficult to act the adjustment device without dismount some elements of the star conveyor.

The realization according to the German document is then not appliable to star conveyors provided with an upper disc (which is fixed because the projecting neck is the same in the different sized containers) for supporting the containers by their projecting neck.

The principal aim of the present invention is to obviate the above-mentioned drawbacks, by providing a star conveyor provided with means for permitting stable and rapid adaptation of the conveyor to containers of various formats.

A further aim is to guarantee a perfect transport of the containers of whatever format, with the containers being perfectly gripped along two generatrices, and without changing the flow line.

The above aims are fully attained by the star conveyor of the invention, comprising an adjustment device for containers of different shapes, which is characterised as set out in the following claims, and in particular in that it comprises two superposed disc elements, perimetrally provided with a plurality of compartments arranged on a level comprised between the bottom and the neck of the containers, said disc elements being provided with means for connecting them kinematically to each other, permitting and/or preventing rotation of one on another to change the compartment aperture.

Further characteristics and advantages of the present invention will better emerge from the detailed description that follows, of a preferred but non-exclusive embodiment here illustrated in the form of a non-limiting example in the accompanying drawings, in which:
- figure 1 shows the star conveyor in vertical section;
- figures 2 and 3 show a plan view of two details of the device for bottle shape change adjustment.

With reference to the figures of the drawings, 1 denotes an adjustable star conveyor for transfer and guide of containers 3 in or out of a machine (not illustrated), or for guiding containers in intermediate tracts.

The conveyor 1 comprises two overlapping disc elements 11, one upper 11a and one lower 11b, rotating solidly with a supporting central shaft 8.

The central shaft 8 is in its turn connected to a motor, not illustrated since of known type.

The discs 11 are provided with an equal number of compartments 4 at the disc 11 periphery. The compartments 4 are destined to house the bodies of containers in transit in the erect position.

The discs 11 act at a zone comprised between the bottom 2 and the neck 5 of the containers 3; said zone preferably being the middle part of the containers 3.

In the case of containers 3 with projecting necks 5, the conveyor 1 is provided with a further disc 10, also equipped with compartments 4, each of which compartments 4 is destined to support a container 3 at its neck.

The containers 3 transit suspended by the neck 5 and resting on the disc 10, and also resting with their bodies on the compartments 4 of the discs 11 at two container 3 generatrices.

Each disc 11 is provided with a slot 9 on one side of which a rack 13 is fashioned.

The rack 13a of the upper disc 11a is fashioned on an opposite side of the slot 9 with respect to the rack 13b of the lower disc 11b.

Slots 9a and 9b are situated one above the other and have a shaft 14 inserted through them. The shaft 14 is equipped with two cog wheels, 15a and 15b, destined to mesh with racks 13a and 13b.

A slot 17 sector 16 is keyed on the shaft 14, in which slot 17 a blocking lever mechanism to block the sector 16 itself is inserted.

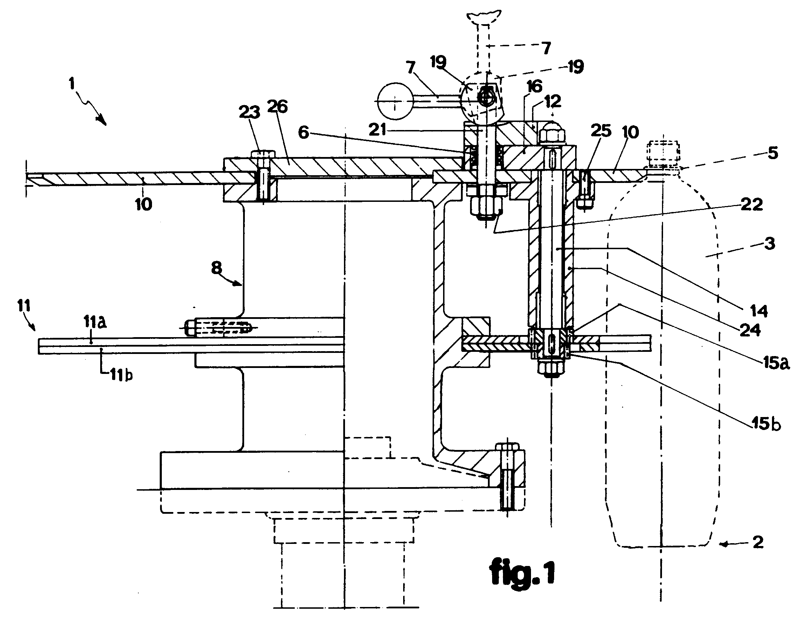

The lever mechanism 18 comprises a manual lever 7 bearing at one end an element 19 of such a shape as to bring the lever 7 into two work positions; one in which the lever 7 is blocked (see figure 1 in an unbroken line), whereat the element 19 presses a plate 12 on to the sector 16, preventing rotation; the other being an adjustment position, (illustrated in figure 1 in a broken line), whereat the element 19 does not block the plate 12, nor does the plate 12 interfere with the sector 16 due to the presence of a spring 6 in the slot 17 wound about a lever pivot 21, which pivot 21 is held in its seat by a fixing nut 22.

The shaft 14, together with the slots 9, the racks 13 and the cog wheels 15 constitute means for connecting the discs 11 kinematically to each other.

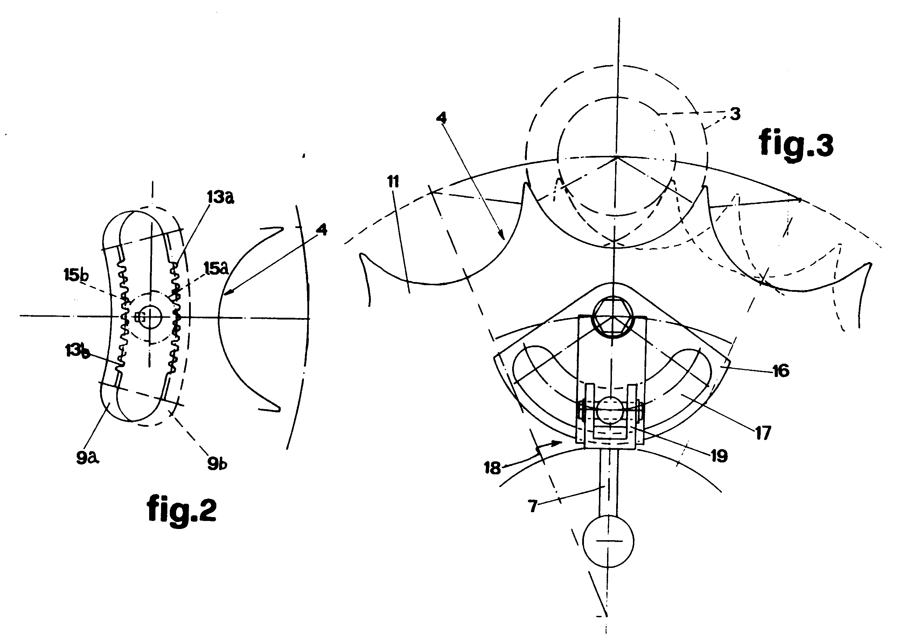

When the container 3 shapes are to be changed, the disc 10 is not changed since the neck 5 diameter is constant for all containers 3 normally used in PET filling stations, whereas the disc elements 11a and 11b are reciprocally rotated in order to adapt the aperture of the compartment obtained by the overlapping of the two discs 11a and 11b to a new body diameter, as illstrated in figure 3.

This can be done manually, by acting on the lever 7 and loosening the pressing action of the plate 12 on the adjustment sector 16, in order to permit of rotating the sector 16 about the shaft 14 axis.

It can also be done by means of a motor (not illustrated).

The rotation of the sector 16 causes a consequent rotation of the shaft 14, and therefore the cog wheels 15a and 15b, which in turn cause equal and opposite rotation of the two disc elements 11a and 11b, giving rise to a different superposing of the compartments 4, with the formation of a compartment which is larger or smaller depending on the rotation direction of the sector 16.

The diameter of the cog wheel 15a is slightly greater than that of the cog wheel 15b, in order to take account of the fact that it acts more externally on the disc, and therefore to enable an identical rotation of the two discs to take place, even if in opposite directions.

The disc 10 is solid to the shaft 8 by means of screws 23, only one of which is illustrated, the screws securing the disc 10 between a plate 26 and the top of the shaft 8. By loosening the screws 23 the disc 10 can be adjusted synchronically with the discs 11. The synchrony of the adjustment is guaranteed by the presence of a sleeve 24, fixed by screws 25 to the dsc 10, in which the shaft 14 connecting the discs 11 rotates accordingly.

In the example the discs 11 and the lever mechanism 18 (constituting an innovative adjustment device) are applied on a star conveyor in which the containers 3 transit suspended by their necks, but the invention could equally be applied to conveyors where the containers rest with their bottoms 2 on a plane (not illustrated) and where their bodies are pushed by the compartment 4 walls.

In this case, instead of the disc 10 a second pair of overlapping discs could be provided, equal to the discs 11 and constituting a further pushing and guiding element for the containers 3.

The advantages of the adjustment device lie in its extreme simplicity and precision, together with its low cost.

A further advantage is that the containers are always well centred with respect to the compartments, even when the container shape is changed: they also always rest on two generatrices.

The adjustment device can be applied on star conveyors preferably equipped with an external container guide (not illustrated), which can be provided with adjustment means of known type to bring the guide into different positions according to the shape of the containers in transit.

An example of such a guide is given in Italian patent application no. PR91A000038, in the name of the same applicant.

## Claims

1. A star conveyor with an adjustment device for containers provided with a projecting neck and of different shapes, comprising:
- means for transporting a plurality of containers (3) separately transiting along a circumference arc of the conveyor (1);
- at least one pair of superposed discs (11a and 11b), perimetrally provided with a plurality of compartments (4) and arranged at a level between a bottom (2) and the projecting neck (5) of a container (3), said compartments (4) being destined to receive and house single containers (3) to be transported, said discs (11a and 11b) being provided with means for connecting the discs (11a and 11b) kinematically one to another, said means being shaped in such a way to permit a reciprocal rotation of the discs (11a and 11b) during adjustment to modify a compartment aperture, and to prevent the reciprocal rotation of the discs (11a and 11b) during normal running conditions;
- an external guide of the containers (3), optionally provided with adjustment means for moving the guide into different positions according to a shape of the transiting containers (3),
characterised in that the means for kinematically connecting the superposed discs (11a and 11b) comprise:
- two slots (9a and 9b), one for each disc (11a and 11b), provided with racks (13a, 13b) on one side of each slot (9a or 9b) such that the rack (13a) associated to the slot (9a) in the upper disc (11a) and the rack (13b) associated to the lower disc (11b) are on opposite sides of a shaft (14) passing through the slots (9a and 9b); and
- a shaft (14) passing through the slots (9a and 9b) and being provided with cog wheels (15a and 15b) destined to mesh with the racks (13a and 13b), such that when the shaft (14) rotates the discs (11a and 11b) also rotate about the common axis;
- in that a lever mechanism (18) is provided for activating or blocking a rotation of the shaft (14);
- and in that a further disc (10), concentric to the other discs (11a and 11b) and provided with the same number of compartments (4) as the discs (11a and 11b), each of which compartments (4) supporting a container (3) by the projecting neck (5);

2. A conveyor as in claim 1, characterised in that the lever mechanism (18) comprises:
- a sector (16) solid to the shaft (14);
- an element (19) conformed such that in one operative position it presses a plate (12) on to the sector (16), preventing the sector (16) from rotating, and in another operative position, in which it is upwardly pushed by a spring (6), it permits the sector (16) to rotate;
- a lever (7) for activating the element (19).

3. A conveyor as in claim 1, characterised in that it comprises a second pair of superposed discs, situated at a distance from the first pair of discs (11a and 11b), and acting on a body of the transiting containers (3).

4. A conveyor as in claim 1, wherein the shaft (14) is inserted in a sleeve (24) connected to a further disc element (10), or to a second pair of discs.

## Patentansprüche

1. Sternrad mit Justiervorrichtung für Behälter, die mit einem herausragenden Hals und unterschiedlicher Form versehen sind, der Art enthaltend:
- Mittel zum Transport einer Mehrzahl von Behältern (3), die einzeln getrennt längs einem peripherischen Kreisumfangsbogen des Sternrades (1) passieren,
- wenigstens ein Paar von scheibenförmigen, übereinanderliegenden Elementen (11a und 11b), die am Umfang mit einer Mehrzahl von Aufnahmen (4) versehen und auf einem Niveau zwischen einem Boden (2) und dem herausragenden Hals (5) eines Behälters (3) angeordnet sind, wobei die besagten Aufnahmen (4) dazu vorgesehen sind, einzelne zu transportierende Behälter (3) aufzunehmen und unterzubringen, und die besagten scheibenförmigen Elemente (11a und 11b) mit Mitteln versehen sind zur gegenseitigen kinematischen Verbindung der scheibenförmigen Elemente (11a und 11b), und die besagten Mittel derart ausgebildet sind, daß eine gegenseitige Drehung der scheibenförmigen Elemente (11a und 11b) während der Regulierung zur Änderung der Öffnung der Aufnahmen möglich ist und die gegenseitige Drehung der scheibenförmigen Elemente (11a und 11b) während des Noralbetriebs verhindert wird;
- eine äußere Führung für die Behälter (3), die eventuell mit Reguliermitteln versehen ist, damit die Führung in Abhängigkeit des Formates der passierenden Behälter (3) verschiedene Stellungen einnehmen kann,
dadurch gekennzeichnet, daß die Mittel zum kinematischen Verbinden der übereinanderliegenden, scheibenförmigen Elemente (11a und 11b) enthalten:
- zwei Langlöcher (9a und 9b), eines für jedes scheibenförmiges Element (11a und 11b), die auf einer Seite jedes Langloches (9a und 9b) mit einer Zahnstange (13a, 13b) versehen sind, so daß die Zahnstange (13a), die mit dem Langloch (9a) des oberen scheibenförmigen Elementes (11a) in Verbindung steht, und die Zahnstange (13b), die mit dem unteren scheibenförmigen Element (11b) in Verbindung steht, auf gegenüberliegenden Seiten einer Welle (14) liegen, welche durch die Langlöcher (9a und 9b) hindurchführt; und
- eine durch die Langlöcher (9a und 9b) durchführende Welle (14), die mit Zahnrädern (15a und 15b) versehen ist, welche geeignet sind, mit den Zahnstangen (13a und 13b) einzugreifen, so daß der Drehung der Welle (14) die gegenseitige Bewegung der scheibenförmigen Elemente (11a und 11b) um die gemeinsame Drehachse entspricht;
- und dadurch gekennzeichnet, daß ein Hebelmechanismus (18) vorgesehen ist zum Antreiben oder Blockieren der Drehung der Welle (14);
- und dadurch gekennzeichnet, daß ein weiteres scheibenförmiges Element (10) vorgesehen ist, konzentrisch zu den anderen scheibenförmigen Elementen (11a und 11b) und mit der gleichen Anzahl von Aufnahmen (4) versehen wie die scheibenförmigen Elemente (11a und 11b), wobei jedes der besagten Aufnahmen (4) einen Behälter (3) am herausragenden Hals (5) trägt.

2. Sternrad nach Patentanspruch 1, dadurch gekennzeichnet, daß der besagte Hebelmechanismus (18) enthält:
- ein Segment (16), das fest mit der Welle (14) verbunden ist;
- ein Element (19), das derart ausgebildet ist, daß es geeignet ist, in einer operativen Stellung eine Platte (12) auf das Segment (16) gedrückt zu halten und somit dessen Drehung zu verhindern, und in einer anderen operativen Stellung geeignet ist, die Drehung des Segments (16) zu erlauben, das von einer Feder (6) nach oben gedrückt wird;
- einen Hebel (7) zum Aktivieren des Elementes (19).

3. Sternrad nach Patentanspruch 1, dadurch gekennzeichnet, daß es ein zweites Paar von übereinanderliegenden, scheibenförmigen Elementen enthält, in einem bestimmten Abstand des ersten Paares von scheibenförmigen Elementen (11a und 11b) und auf den Körper der passierenden Behälter (3) wirkend.

4. Sternrad nach Patentanspruch 1, wobei die Welle (14) auf Maß in eine Buchse (24) eingeschoben ist, die mit einem weiterem scheibenförmigen Element (10) oder mit einem zweiten Paar von scheibenförmigen Elementen verbunden ist.

## Revendications

1. Un convoyeur à étoile avec un dispositif de régulation pour des conteneurs pourvus d'un coi saillant et de formes différentes, comprenant:
- des moyens pour le transport d'une pluralité de conteneurs (3) transitant séparement le long d'un arc de circonférence du convoyeur (1);
- au moins une paire de disques superposés (11a et 11b), pourvus périmétralement d'une pluralité d'alvéoles (4) et arrangés à un niveau compris entre un fond (2) et le col saillant (5) d'un conteneur (3), lesdites alvéoles (4) étant destinées à recevoir et à loger des conteneurs (3) à transporter, lesdits disques (11a et 11b) étant pourvus de moyens pour relier les disques (11a et 11b) cinématiquement l'un à l'autre, lesdits moyens étant conformés de manière à permettre une rotation réciproque des disques (11a et 11b) pendant la régulation pour modifier l'ouverture des alvéoles, et pour prévenir la rotation réciproque des disques (11a et 11b) pendant les conditions normales de fonctionnement;
- un guide externe des conteneurs (3), pourvu optionellement de moyens de régulation pour orienter le guide dans des positions différentes selon la forme des conteneurs transitants (3),
caractérisé en ce que les moyens pour relier cinématiquement les disques superposés (11a et 11b) comprennent:
- deux fentes (9a et 9b), une pour chaque disque ( 11a et 11b), pourvues de crémaillères (13a et 13b) sur un côté de chaque fente (9a ou 9b), de manière à ce que la crémaillère (13a) associée à la fente (9a) dans le disque supérieur (11a) et la crémaillère (13b) associée au disque inférieur (11b) soient disposées sur les côtés opposés d'un arbre (14) passant au travers des fentes (9a et 9b); et
- un arbre (14) passant au travers des fentes (9a et 9b) et étant pourvu de roues dentées (15a et 15b) destinées à s'engrener avec les crémaillères (13a et 13b), de manière à ce que, quand l'arbre (14) pivote, les disques (11a et 11b) pivotent eux-aussi autour de l'axe commun;
- en ce qu'il est pourvu d'un mécanisme à levier permettant ou bloquant la rotation de l'arbre (14);
- et en ce qu'un autre disque (10), concentrique aux autres disques (11a et 11b), est pourvu du même nombre d'alvéoles (4) que celui des disques (11a et 11b), dont chacune des alvéoles (4) supporte un conteneur (3) par le col saillant (5).

2. Un convoyeur selon la revendication 1, caractérisé en ce que le mécanisme à levier (18) comprend:
- un secteur (16) solidaire de l'arbre (14);
- un élément (19) conformé de manière à ce qu'il presse une plaque (12) sur le secteur (16) dans une position opérative, bloquant la rotation du secteur 16, et qu'il soit poussé vers le haut par un ressort (6) dans une autre position opérative, permettant la rotation du secteur (16);
- un levier (7) pour l'activation de l'élément (19).

3. Un convoyeur selon la revendication 1, caractérisé en ce qu'il comprend une seconde paire de disques superposés, située à une certaine distance de la première paire de disques (11a et 11b), et agissant sur le corps d'un conteneur transitant (3).

4. Un convoyeur selon la revendication 1, dans lequel l'arbre (14) est inséré dans un manchon (24) relié à un autre disque (10), ou à une seconde paire de disques.
